# EUROPÄISCHE PATENTSCHRIFT

(11) **EP 0 786 204 B1**
(45) Veröffentlichungstag und Bekanntmachung des Hinweises auf die Patenterteilung: **28.10.1998**
(21) Anmeldenummer: 96119743.1
(22) Anmeldetag: 10.12.1996
(51) Int. Cl.: A01K 35/00, A01K 11/00

(54) **Einrichtung zur Ausstattung von Geflügel mit einem Transponder**
Device for fitting birds with a transponder
Appareil pour attacher un transpondeur aux oiseaux

(30) Priorität: 23.01.1996 DE 29601041 U; 25.10.1996 DE 19644328
(43) Veröffentlichungstag der Anmeldung: 30.07.1997
(73) Patentinhaber: Diehl Ident GmbH, 90478 Nürnberg (DE)
(72) Erfinder: Gessner, Annette, 66894 Käshofen (DE); Eadie, Brian, Renfrewshire, Scotland PA 9 IDL (GB)
(74) Vertreter: Hofmann, Gerhard, Dipl.-Ing. Patentassessor

(56) Entgegenhaltungen:
- EP-A- 0 485 039
- WO-A-95/04455
- BE-A- 1 006 747
- DD-A- 252 532
- US-A- 2 970 359
- US-A- 5 461 807

## Beschreibung

Die Erfindung betrifft eine Einrichtung gemäß dem Oberbegriff des Anspruches 1.

Zur Ausstattung von Geflügel mit elektronischen passiven Hochfrequenz-Transpondern ist es aus dem Beitrag 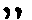 Die Markierung von Zoo- und Haustieren mit dein elektronischen Markierungsverfahren EURO I. D." von O. Behlert in KLEINTIERPRAXIS 34. Jahrgang Seiten 477 bis 479 (1989) bekannt, die dünnen stabförmigen, glasummantelten Transponder in die Brustmuskulatur, in einen Oberschenkel oder in eine Halsseite vor der Schulter von Geflügel zu implantieren, wo der Fremdkörper ortsstabil einwächst und selbst nach dem Schlachten des Tieres nicht ohne weiteres wieder entfernt werden kann. Solch eine unmittelbare Transponder-Bestückung ist deshalb nur für ausgesuchte Tiere diskutabel, etwa im Zoo zur Dokumentation des Verhaltens oder der Zuchterfolge und im Haustierbereich zur Besitzzuordnung. Bei der Massentierhaltung zur Fleischgewinnung würde ein solcher implantierter Transponder später empfindlich stören.

Im Taubensport ist es bekannt, Brieftauben mit Fußringen auszustatten, in die ein Ident-Transponder eingebaut ist, um die Ankunftszeit der Taube im Heimatschlag ohne manuelle Eingriffserfodernisse automatisch erfassen und für die Wettkampfauswertung bereitstellen zu können. Besonders bei Küken ist aber ein dauerhaftes Anlegen von Fußringen und insbesondere der Einsatz der vergleichsweise großen Transponder-Fußringe kaum möglich, weil in den ersten Lebenstagen des Geflügels die Füße noch so klein und weich sind, daß der Ring leicht wieder abgestreift werden könnte; während andererseits in den ersten Lebenswochen der Umfang der Geflügelbeine derart rasch zunimmt, daß ein über dem Fuß enger anliegender Ring den Wachstumprozeß beeinträchtigen würde. Andererseits ist es in der gewerblichen Tierhaltung gerade auch für erst mehrtägige Küken von großem Interesse für die Optimierung des Aufzuchtergebnisses, schon möglichst früh z.B. die Veränderung des Futterverhaltens und der Nestgewohnheiten einzelner Tiere beobachten und auswerten zu können.

Aus der EP 0485 039 A1 ist ein Ring zum Anlegen um das Bein eines Tieres bekannt, der über wenigstens einen Teil seines Umfangs im Querschnitt wellenförmig verläuft. Dadurch soll er, ohne Wachstumsstörungen hervorzurufen, sich mit dem Anwachsen des Beines strecken zu können. In eine Verdickung der wellenförmigen Struktur ist parallel zur Ringachse ein Hohlraum zur Aufnahme eines stabförmigen Transponders vorgesehen. Ein solcher elastisch sich aufweitender, gewellter Ring geht aber in der Praxis sehr leicht vom Bein des Tieres wieder verloren.

Dagegen ist es zur Viehauszeichnung mittels massiver Ohrmarken aus der WO 95/04455 A1 bekannt, bei einem zweischenklig-U-förmigen Gebilde mit biegeweichem Joch diesem gegenüber an den beiden freien Schenkelstirnenden, quer zur Längserstreckung der Schenkel orientiert, einerseits einen Raststift und andererseits einen Rastring vorzusehen. Der Stift weist in seiner Längsrichtung - und damit quer zur Orientierung der Schenkel - einen verschlossenen Hohlraum zur Aufnahme eines stabförmigen passiven Hochfrequenz-Transponders auf. Das bedingt einen ganz erheblichen Durchmesser des Stiftes; und dennoch muß dieser dicke am Schaft profilierte Stift zum Anlegen der Ohrmarke durch das Ohr eines Tieres gebohrt werden, um mit seiner freien Spitze danach das Loch im Rastring durchstoßen und in einen dahinter gelegenen, hutförmig auftragenden Raum hineinstoßen zu können. Das geschwächte Joch, dem Raststift gegenüber als biegsame Verbindung zwischen den beiden Schenkeln ausgelegt, ist als Sollbruchstelle für den Fall konzipiert, daß das Ohr eines Tieres sich mit diesem geschlossenen U-förmigen Gebilde in einem Hindernis verfängt. Beiläufig ist in jener Publikation erwähnt, daß der Transponder nicht wie allein dargestellt und beschrieben zwingend im Verriegelungs-Raststift angeordnet sein muß, sondern auch an beliebiger anderer Stelle jener einteiligen elektronischen Ohrmarke vorgesehen sein kann. Der Einschluß des Transponders (insbesondere in den Verriegelungsstift) hat aber stets zur Folge, daß er nicht ohne weiteres aus der Ohrmarke zurückgewonnen werden kann.

Der Erfindung liegt jedoch - ausgehend von den für Geflügel bekannten Fußringen - die technische Problematik zugrunde, eine Geflügelmarke mit elektronischem Transponder zu schaffen, die schon den Küken in den ersten Lebenstagen, ohne deren Wachstum zu stören, um einen Flügelknochen herum angelegt werden - aus der aber dann später ohne das Erfordernis, die Marke wieder vollständig abnehmen zu müssen, der Transponder rückgewonnen werden kann, um ihn danach erneut (nämlich in einer neuen Flügelmarke) einsetzen zu können.

Diese Aufgabe ist erfindungsgemäß im wesentlich durch eine Transponder-Flügelmarken gemäß dem Kennzeichnungsteil des Hauptanspruches gelöst.

Nach dieser Lösung wird die bekannte, um den Flügelknochen des Geflügels herumbiegbare Metallstriefen-Geflügelmarke mit eingeprägter oder aufgedruckter Identinformation ersetzt durch eine wenigstens zweischenklig-U-, V-, Z- oder W-förmige Flügelmarke aus elektrisch nicht-leitendem Material, die an einem ihrer Schenkel den Hochfrequenztransponder aufnimmt und die mittels eines Widerhaken-Verriegelungsstiftes um den Flügelknochen legbar ist. Der röhrchenförmig gekapselte Transponder kann kraft- oder formschlüssig in einer wannenförmigen Vertiefung oder in einer sacklochförmigen Tasche gehaltert sein, welche beim Kunststoff-Spritzguß gleich mit ausgebildet werden. Der Widerhaken-Verriegelungsstift kann an ein freies Schenkelende angeformt sein oder aber als separates Beistellteil durch dessen Lochung verrastend hindurchgesteckt werden. Dem Stift gegenüberliegend dient ein im Vergleich zur Materialstärke der Schenkel verjüngtes Joch beim Anlegen der Flügelmarke als Sollbiegestelle und erforderlichenfalls als Sollbruchstelle zum Entfernen der Flügelmarke. Der nur in die Wanne oder Tasche eingeklemmte und im Vergleich zur Spritzguß-Flügelmarke teure sowie für einen bestimmten Züchter registrierte Transponder kann dann etwa zum Abschluß der Mastphase aus seiner Kunststoff-Halterung wieder entnommen und zur Neubestückung einer nachwachsenden Generation bereitgehalten werden.

Zusätzliche Alternativen und vorteilhafte Weiterbildungen sowie weitere Merkmale und Vorteile der Erfindung ergeben sich aus den weiteren Ansprüchen und, auch unter Berücksichtigung der abschließenden Zusammenfassung, aus nachstehender Beschreibung von in der Zeichnung unter Beschränkung auf das wesentliche abstrahiert aber annähernd maßstabsgerecht vergrößert skizzierten bevorzugten Realisierungsbeispielen zur erfindungsgemäßen Lösung. In der Zeichnung zeigt:
- Fig. 1: eine Flügelmarke mit integrierter, nach außen abgeschlossener Transponder-Aufnahme und mit integriertem Verriegelungsstift in Schrägansicht,
- Fig. 2: eine Flügelmarke mit von außen zugänglicher Transponder-Aufnahme und mit separatem Verriegelungsstift im Längsschnitt,
- Fig. 3: im Längsschnitt eine z-förmig-dreischenklige Flügelmarke mit separatem Verriegelungsstift als Weiterbildung der Flügelmarke nach Fig. 1 sowie
- Fig. 4: die Flügelmarke nach Fig. 3 bei gestrecktem Zustand ihrer drei Schenkel in Ansicht gegen die wannenförmige Transponder-Aufnahme, hier aber ohne Verriegelungsstift und Transponder gezeigt.

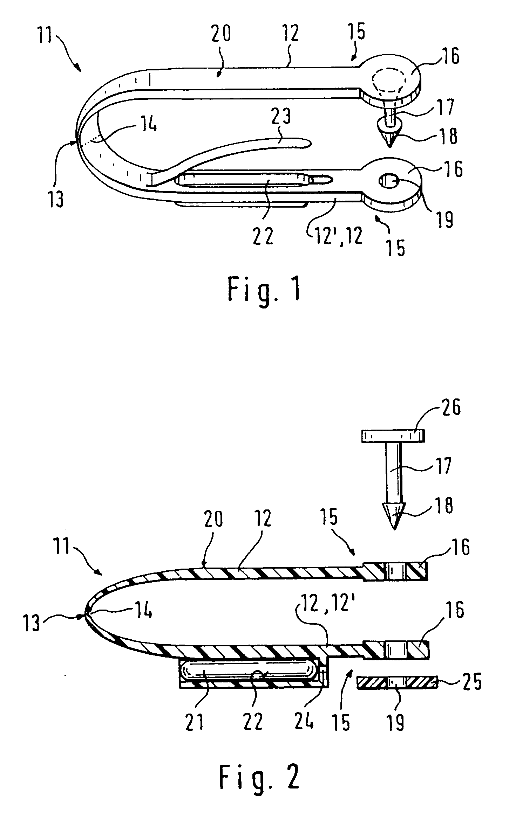

Die in Fig. 1 in perspektivischer Darstellung skizzierte, im wesentlichen U-oder V-förmige Flügelmarke 11 ist einteilig aus steifelastischem Kunststoff gespritzt. Ihre relativ biegesteifen Schenkel 12 sind im Bereiche des Joch 13 biegeelastisch miteinander verbunden, wofür die Dicke des Schenkel-Querschnitts hier zu einem Biege- oder Sollbruch-Bereich 14 geschwächt ist. An den stirnseitig gegenüberliegenden freien Schenkelenden 15 laufen die Schenkel 12 in im wesentlichen kreisförmig angeformte Platten 16 aus. An der einen ist, auf die andere zu weisend, ein Verriegelungsstift 17 mit Widerhaken-Spitze 18 angeformt. Diese kann durch ein Loch 19 in der ringförmigen gegenüberliegenden Platte 16 hindurchgedrückt, danach aber ohne mechanische Zerstörung nicht wieder daraus zurückgezogen werden.

Der eine, in der Zeichnung oben dargestellte und bei der Answendung sichtseitig vor dem Flügel gelegene Schenkel 12 kann außen als Informationsträger 20 ausgebildet sein, also etwa mit einem Oberflächen-Finish zum Bekleben oder zum Bedrucken mit einer visuell aufnehmbaren Information ausgestattet sein (die etwa alphanumerisch oder als Barcode darstellbar ist; in der Zeichnung nicht berücksichtigt). Der gegenüberliegende, in der Zeichnung unten dargestellte und bei der Anwendung zwischen Flügel und Körper des Geflügels gelegene Schenkel 12' ist als Transponderträger ausgestattet.

Vorzugsweise wird ein Transponder 21 (Fig. 2; in Fig. 1 nicht dargestellt) in der Form eines an sich für Tierkörperinjektion ausgelegten kleinen Glasröhrchens eingesetzt, in dem ein Speicherchip an eine, auf Resonanz bezüglich einer definierten Abfrage-Hochfrequenz abgestimmte, Subminiatur-Ferritkernspule angeschlossen ist. Ein Abfragegeld dieser Frequenz induziert in den Transponder 21 die elektrische Energie für das Auslesen des Speichers mit der Folge, daß das Abfragefeld im Rhythmus der abgespeicherten Identinformation bedämpft (moduliert) wird. Eine Demodulation dieser zeitabhängigen Bedämpfung liefert im Lesegerät, von dem das Hochfrequenz-Afragefeld abgestrahlt wird, eine decodierbare Darstellung der binärcodierten Identinformation des gerade vom Abfragegeld erfaßten Transponders 21 zur Kennung des Tieres, etwa des Kükens, das mit dieser Transponder-Marke 11 ausgestattet ist.

Das Glasröhrchen des Transponders 21 kann unmittelbar auf die innere oder äußere Oberfläche eines den Transponder tragenden Schenkels 12' aufgeklebt werden. Einfacher und vor allem zuverlässiger ist die Montage, wenn in dem Transponderschenkel 12' eine in dessen Längsrichtung sich erstreckende wannenförmige Aufnahme 22 eingeformt ist, die sich auch über die Materialstärke diese Schenkels 12' hinaus nach außen vorwölben kann, wie in Fig. 1 berücksichtigt. In diese wannenförmige Aufnahme 22 kann das Glasröhrchen des Transponders 21 dann problemlos eingelegt und darin form- oder kraftschlüssig festgelegt werden. Die kraftschlüssige Festlegung kann durch einen Kleber erfolgen, oder durch Überschweißen etwa mittels eines Hüllblattes als Abdeckung 23, das auf die Innenseite des Transponderschenkels 12', die wannenförmige Aufnahme 22 überdeckend, angeformt ist oder aufgelegt wird. Besonders einfach ist die Handhabung, wenn solch ein dünnes längliches Hüllblatt nach Art einer Spritzhaut längsseits oder zungenförmig querseitig an die Innenseite des Transponderschenkels 12' in der Nachbarschaft der Aufnahme 22 angelenkt (also als Klappe angespritzt) ist und dann nach dem Einlegen des Transponders 21 nur darübergeschwenkt und am freien Ende verklebt oder verschweißt zu werden braucht, wie in Fig. 1 berücksichtigt.

Insbesondere dann, wenn z.B. nach einem Generationenwechsel eine Wiederverwendung des Transponders 21 für eine andere Flügelmarke 11 vorgesehen ist, kann es zweckmäßiger sein, das Glasröhrchen lediglich kraftschlüssig in die Aufnahme 22 einzusetzen, etwa in die wannenförmige Vertiefung gemäß Fig. 1 einzuklemmen. Zweckmäßig ist für diesen Fall eine taschenförmige Aufnahme 22 nach Art eines Sackloches (Fig. 2), die dann außen am Transponderschenkel 12' längsseits angeordnet, vorzugsweise angeformt, und zweckmäßigerweise dadurch zugänglich ist, daß sie an einem Stirnende zum Einschieben des Transponderröhrchens 21 offen ist. Gegenüberliegen kann diese an sich sacklockförmige Aufnahme 22 ebenfalls mit einer kleinen Öffnung 24 ausgestattet sein, um hier einen Ausstoßdorn zum Herausschieben des Transponders 21 aus seiner gegenüber geöffneten Aufnahme 22 einführen zu können.

Bei der zweischenkligen Variante nach Fig. 2 ist der Verriegelungsstift 17 nicht integraler Bestandteil der Flügelmarke 11, sondern separat ausgebildet. Seine Widerhaken-Spitze 18 kann durch gelochte Platten 16 an den Schenkel-Stirnenden 15 hindurchgesteckt und gleich dabei, oder mit einer gegenüberliegend hinterlegten Lochscheibe 25, verrastet werden. Einsteckseitig begrenzt ein umlaufender Kragen 26 am Stift 17 den Einsteckvorgang in die bei zusammengelegten Schenkeln 12-12' fluchtenden Löcher 19.

Zum Anlegen der Flügelmarke 11 etwa mit einer Klemmzange sind die Schenkel 12,12' (bei bereits mit Transpondern 21 bestückten Aufnahmen 22) bis annähernd in die gestreckte Form auseinandergeklappt, so daß sie störungsfrei aus einem Magazin Stück für Stück nachgeliefert werden können. Das transponderseitige Schenkelende 15 wird dem Geflügel hinter dem Flügelknochen durch den abgespreitzten Flügel geschoben, woraufhin die beiden Schenkel 12,12' um das Joch 13 zusammengebogen werden. Dadurch liegen die Platten 16 koaxial vor dem Flügelknochen, und sie können durch den integral angeformten oder durch den aus dem Magazin mitgelieferten Verriegelungsstift 17 miteinander formschlüssig verbunden werden, so daß dann bei der angelegten Flügelmarke 11 der Informationsträger 20 vor dem Flügel sichtbar ist.

Um die Flügelmarke 11 wieder zu entfernen, etwa um den Transponder 21 in einer anderen Flügelmarke 11 (bei einem anderen Tier) wiederverwenden zu können, wird der Veirriegelungsstift 17 durchschnitten und/oder der als Sollbruchstelle ausgelegte verjüngte Bereich 14 im Joch 13 aufgebrochen oder ebenfalls aufgeschnitten, so daß sich jedenfalls die beiden nun nicht mehr fest miteinander verbundenen Schenkel 12,12' nach beiden Seiten des Flügels abheben lassen. Der Glasröhrchen-Transponder 21 wird aus der wannenförmigen bzw. sacklochförmigen Aufnahme 22 in Querrichtung herausgehoben bzw. in Längsrichtung herausgeschoben und kann unmittelbar zur Bestückung einer anderen Flügelmarke 11 dienen: während bei Wiederverwendung einer Flügelmarke 11 insgesamt diese erst desinfiziert werden müßte.

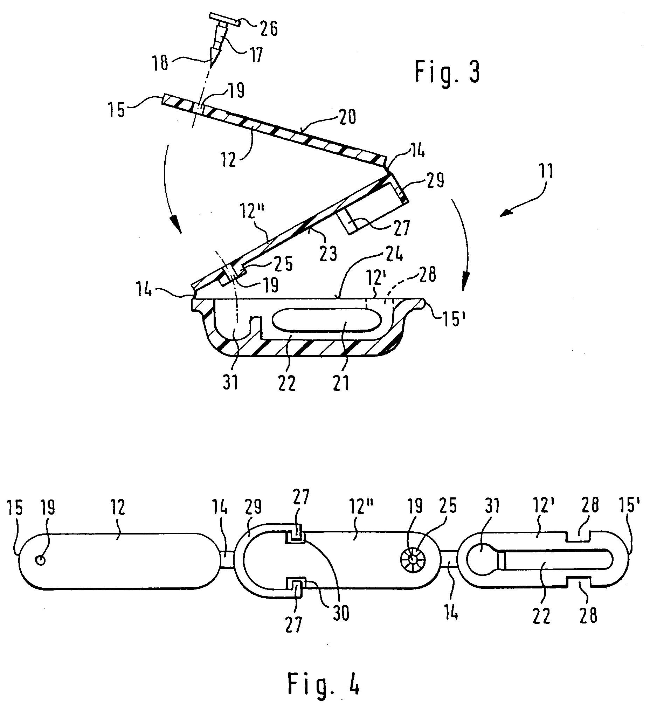

Beim insbesondere gegenüber Fig. 1 abgewandelten Ausführungsbeispiel der Flügelmarke 11 nach Fig. 3 / Fig. 4 handelt es sich bei noch offener Marke 11 um die lineare Aufeinanderfolge dreier Schenkel, nämlich eines Abdeck-Schenkels 12 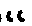 zwischen einem Innen-Schenkel 12 und einem später außenliegenden Transponder-Schenkel 12'. Letztere sind an den beiden Enden des Abdeck-Schenkels 12 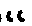 jeweils mittels Film-Scharnieren als den verjüngten Biegebereichen 14 miteinander verbunden, vorzugsweise einstückig aus leichtem Plastikmaterial gespritzt. Der Flügelknochen des mittels einer solchen Marke 11 nach Fig.3 auszustattenden Geflügels wird zwischen dem Innen-Schenkel 12 und dem an diesen anschließenden Abdeck-Schenkel 12'' eingefaßt und kommt somit nicht mit dem Transponder-Bereich in Berührung. Die Rast-Scheibe 25, welche die Widerhaken-Spitze 18 des schlank-konusförmigen Verriegelungsstiftes 17 irrreversibel aufnimmt, ist in der Nähe des dem Scharnier-Bereich 14 gegenüberliegenden Endes des Abdeck-Schenkels 12 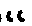 angeordnet bzw. angeformt. Aus der Ansicht in Fig. 4 ist ersichtlich, daß das Loch 19 in der Rastscheibe 25, welche die Widerhaken-Spitze 18 des schlank-konusförmigen Verriegelungsstiftes 17 irreversibel aufnimmt, radial geschlitzt ist, um das Einführen der Widerhaken-Spitze 18 zu erleichtern und dann zusätzlich zu jenem Formschluß einen Widerhaken-Kraftschluß auf den Schaft des Verriegelungsstiftes 17 auszuüben.

Der Röhrchen-Transponder 21 ist wieder in eine wannenförmige Ausbuchtung im Transponder-Schenkel 12', parallel zu dessen Längserstreckung, eingelegt, wobei der Verschluß dieser Aufnahme 22 nun mittels des die beiden äußeren Schenkel 12/12' überbrückenden inneren Schenkels 12'' erfolgt. Dafür werden der Transponder-Schenkel 12' und der sich an einem Ende anschließende Abdeck-Schenkel 12'' um den zum Filmscharnier verjüngten Übergangsbereich 14 in Längsrichtung übereinander geklappt, wodurch die Beschickungsöffnung der wannenförmigen Transponder-Aufnahme 22 mechanisch zuverlässiger als durch eine dünne Zunge (gemäß Fig. 1) abgedeckt wird. Die Anordnung erfährt eine kraftschlüssige, wieder-öffnenbare Rast-Verriegelung durch seitliche Klauen 27, die der Rastscheibe 25 gegenüber an den Abdeck-Schenkel 12'' seitlich angeformt sind und in örtlich korrespondierende seitliche Einbuchtungen 28 neben der Aufnahme-Wanne 22 im Transponder-Schenkel 12' eingreifen. Diese Rasthalterung wird stabilisiert durch einen hufeisenförmig zwischen den beiden Klauen 27 längs des benachbarten Stirnendes des Abdeck-Schenkels 12'' verlaufenden Kragen 29, in den sich das freie Schenkel-Stirnende 15' beim Zusammenklappen dieser beiden Schenkel 12''-12' formschlüssig hineinschmiegt, um dadurch seinem Scharnier-Bereich 14 gegenüber in Längs- und Querrichtung formschlüssig abgestützt zu werden und so die Rastverbindung zu stabilisieren. Um trotz beschränkter Abmessungen in Dickenrichtung des jeweiligen Schenkels 12 die Federwirkung für die elastisch verformbaren Rast-Klauen 27 noch zu verbessern, sind unter deren auf die Längsmittelebene des Schenkels 12'' und damit aufeinander zu weisenden Enden Freisparungen 30 im Abdeck-Schenkel 12'' vorgesehen.

Dem freien Schenkel-Stirnende 15' gegenüber, also in der Nachbarschaft des scharnierförmigen Übergansbereiches 14 zum mittleren oder Abdeck-Schenkel 12'', ist stirnseitig vor der Transponder-Aufnahmewanne 22 im Transponder-Schenkel 12' noch eine Aushölung 31 eingeformt, in die bei verschlossener Transponder-Aufnahme 22 die unter dem Deck-Schenkel 12'' angeformte Rastscheibe 25 eintaucht und die somit auch tief genug für den Eingriff der Verriegelungsstift-Spitze 18 ausgelegt ist.

So ist durch die Weiterbildung von der V-förmigen zweischenkligen Flügelmarke 11 zur Z-förmigen dreischenkligen Flügelmarke 11 eine funktionale Trennung zwischen dem Befestigungsbereich am Flügelknocken und dem Aufnahmebereich für den Transponder 21 gewährleistet. Dessen wannenförmige Aufnahme 22 liegt vor dem Flügel des mit dieser Marke 11 ausgestatteten Tieres. Die Aufnahme 22 kann ohne Lösen der Marke 11 vom Flügel, nach manuellem Aufsprengen des Hufeisen-Rastverschlusses bei den Kragen-Klauen 27, durch bloßes Abklappen des Transponder-Schenkels 12' vom mittleren Schenkel 12'' wieder geöffnet werden, um den Transponder 21 - unter Zurücklassen des Kunststoffteiles (Flügelmarke 11) am Schlachttier - zu anderweitiger Wiederverwendung einfach entnehmen zu können.

Mit anderen Worten liegt bei der bevorzugten dreischenkligen Ausführung ein mit dem Transponder-Schenkel 12' reversibel verrastbarer Abdeck-Schenkel 12 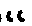 bei noch offener Marke 11 in Längsrichtung zwischen dem Transponder-Schenkel 12' und einem rückwärtigen Halte- Schenkel (12), welcher seinerseits an seinem freien Schenkelende 15 mittels eines Widerhaken-Stiftes 17 - der Verrastung gegenüber - unter Einfassung eines Flügelknochens mit dem Abdeck-Schenkel 12 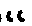 formschlüssig verbindbar ist. Diese nach dem Anlegen an den Flügel irreversible Verbindung muß später, zur Entnahme des Transponders 21 vor dem Schlachten, nicht wieder aufgebrochen werden, weil hierfür dann einfach der Transponder-Schenkel 12' mit seiner längsseits eingeformten Transponder-Aufnahme 22 von der übrigen Flügel-Marke 11 und damit vom Flügel des Federvieh abzuklappen ist, um den vergleichsweise kostbaren Transponder 21 bei der nachwachsenden Generation, dann mit neuer Kunststoff-Marke 11, wiederverwenden zu können, während die eigentliche dreischenklige Marke 11 am ausgewachsenen Tier zurückbleibt.

## Patentansprüche

1. Einrichtung zur Ausstattung von Geflügel mit einem Transponder (21),
dadurch gekennzeichnet,
daß ein stabförmig-schlanker Transponder (21) längs eines Schenkels (12') aus elektrisch nicht-leitendem Material einer wenigstens zweischenkligen, insbesondere U-, V-, Z- oder W-förmigen, Flügelmarke (11) angeordnet ist, die mittels zweier in Längsrichtung über einen biegeweichen Bereich (14) miteinander verbundener Schenkel (12) und eines jenem Bereich (14) gegenüberliegenden Verriegelungsstiftes (17) unter Umgreifen eines Flügelknochens dem Geflügel anlegbar ist, wobei der Schenkel (12') in seiner Längsrichtung mit einer taschen- oder wannenförmigen Aufnahme (22) für den Transponder (21) ausgestattet ist, aus welcher der Transponder (21) wieder entnehmbar ist, ohne die Flügelmarke (11) wieder abnehmen zu müssen.

2. Einrichtung nach Anspruch 1,
dadurch gekennzeichnet,
daß die Transponder-Aufnahme (22) taschenförmig an einem der Schenkel (12') angeformt ist und einem stirnseitigen Eintritt gegenüber mit einer Öffnung (24) zum etwa koaxialen Eingriff eines Ausstoßdornes für den Transponder (21) ausgestattet ist.

3. Einrichtung nach Anspruch 1,
dadurch gekennzeichnet,
daß der Transponder (21) in einer wannenförmigen Aufnahme (22) festgelegt ist, die in einen Schenkel (12') in Längsrichtung eingeformt ist und von einer Abdeckung (23) verschließbar ist.

4. Einrichtung nach Anspruch 3,
dadurch gekennzeichnet,
daß die Abdeckung (23) zungen- oder klappenförmig an den Transponder-Schenkel (12') angeformt ist.

5. Einrichtung nach Anspruch 3 oder 4,
dadurch gekennzeichnet,
daß bei einer wenigstens dreischenkligen Flügelmarke (11) an den Transponder-Schenkel (12') als Abdeckung (23) seiner Aufnahme (22) ein Abdeck-Schenkel (12 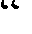 ) angelenkt ist und daß diese beiden Schenkel (12',12 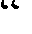 ) miteinander reversibel verrastbar sind.

6. Einrichtung nach Anspruch 5,
dadurch gekennzeichnet,
daß einer der Schenkel (12 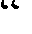 ) bei einem Stirnende von einem bogenförmigen Kragen (29) umgriffen ist, der in Rastklauen (27) endet, denen vor dem Stirnende (15') des in Längsrichtung benachbarten Schenkels (12') Einbuchtungen (28) zugeordnet sind.

7. Einrichtung nach einem der Ansprüche 3 bis 6,
dadurch gekennzeichnet,
daß eine Z- oder W-förmige Flügelmarke (11) aus elektrisch nicht-leitendem Material vorgesehen ist, deren Schenkel (12) in Längsrichtung aufeinanderfolgend über biegeweiche Bereiche (14) miteinander verbunden und einer paarweisen Verrastung (Kragen 29) gegenüber durch einen Widerhaken-Stift (17) miteinander verbindbar sind.

8. Einrichtung nach Anspruch 7,
dadurch gekennzeichnet,
daß eine Widerhaken-Spitze (18) an dem Stift (17) ausgebildet ist, der von einem freien Schenkelende (15) aus die gelochte Platte (16) im Verbindungs-Bereich (14) zu einem benachbarten Schenkel (12' bzw. 12'') durchgreift.

9. Einrichtung nach einem der vorangehenden Ansprüche,
dadurch gekennzeichnet,
daß ein Verriegelungsstift (17) mit seiner Widerhaken-Spitze (18) eine schlitzgelochte Platte (16) durchgreift und in eine Aushöhlung (31) eingreift, die im Transponder-Schenkel (12') vor einem Stirnende der wannenförmigen Transponder-Aufnahme (22) freigespart ist.

10. Einrichtung nach einem der Ansprüche 7 bis 9,
dadurch gekennzeichnet,
daß ein hufeneisenförmig zwischen zwei Klauen (27) längs des benachbarten Stirnendes eines Abdeck-Schenkels (12 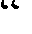 ) verlaufender Kragen (29) vorgesehen ist, in denen sich das freie Schenkel-Stirnende (15') beim Zusammenklappen zweier aufeinanderfolgender Schenkel (12'-12 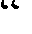 ) formschlüssig hineinschmiegt, um dem Scharnier-Bereich (14) gegenüber in Längs- und Querrichtung formschlüssig abgestützt zu sein.

## Claims

1. Device for providing poultry with a transponder (21),
characterized in that
a slim, rod-shaped transponder (21) is located along one side (12') made of electrically non-conducting material of a wing tag (11), which has at least two sides, in particular is U-, V-, Z- or W-shaped and can be attached to the poultry by means of two sides (12) which are joined together in longitudinal direction by way of a flexible region (14) and a locking pin (17) lying opposite this region (14) and encircle a wing bone, the side (12') being provided in longitudinal direction with a pocket- or trough-shaped seat (22) for the transponder (21), from which the transponder (21) can be taken out again without the wing tag (11) having to be removed again.

2. Device according to Claim 1,
characterized in that
the transponder seat (22) is formed in the shape of a pocket on one of the sides (12') and, opposite an entrance at one end, is provided with an opening (24) for the roughly coaxial operation of an ejector spike for the transponder (21).

3. Device according to Claim 1,
characterized in that
the transponder (21) is fixed in a trough-shaped seat (22) which is farmed on one side (12') in longitudinal direction and can be closed by a cover (23).

4. Device according to Claim 3,
characterized in that
the cover (23) is formed in the shape of a tongue or flap on the transponder side (12').

5. Device according to Claim 3 or 4,
characterized in that,
in the case of a wing tag (11) which has at least three sides, a covering side (12'') is connected to the transponder side (12') as cover (23) for its seat (22), and in that these two sides (12',12'') can be reversibly locked together.

6. Device according to Claim 5,
characterized in that
one of the sides (12'') is surrounded at one end by an arcuate collar (29) which ends in locking claws (27), with which recesses (28) located before the end (15') of the side (12') which is adjacent in longitudinal direction are associated.

7. Device according to one of Claims 3 to 6,
characterized in that
a Z- or W-shaped wing tag (11) made of electrically non-conducting material is provided, the sides (12) of which are successively joined together in longitudinal direction by way of flexible regions (14) and, opposite a twin-locking (collar 29), can be joined together by a barbed pin (17).

8. Device according to Claim 7,
characterized in that
a barbed point (18) is formed on the pin (17) which, from the free end (15) of one side, passes through the perforated plate (16) in the connecting region (14) to an adjacent side (12' or 12'').

9. Device according to one of the preceding claims,
characterized in that
a locking pin (17) with its barbed point (18) passes through a slotted plate (16) and engages in a recess (31), which is made in the transponder side (12') in front of one end of the trough-shaped transponder seat (22).

10. Device according to one of Claims 7 to 9,
characterized in that
a horseshoe-shaped collar (29) is provided, which runs between two claws (27) along the adjacent end of a covering side (12''), into which the side's free end (15'), when two successive sides (12'-12'') are folded together, fits snugly and positively so as to be positively supported in longitudinal and in horizontal direction opposite the hinged region (14).

## Revendications

1. Dispositif destiné à équiper des volatiles d'un transpondeur (21), caractérisé en ce qu'un transpondeur (21) allongé en forme de barre est disposé le long d'une branche (12') en matériau électriquement non conducteur d'une marque d'aile (11) à deux branches, en particulier en forme de U, de V, de Z ou de W, qui peut être appliquée au volatile, au moyen de deux branches (12) reliées entre elles dans la direction longitudinale, par une zone (14) flexible, et au moyen d'une goupille de verrouillage (17) opposée à cette zone (14), en passant sous un os de l'aile, la branche (12') présentant dans sa direction longitudinale un logement (22) en forme de poche ou de bac, destiné au transpondeur (21), duquel le transpondeur (21) peut à nouveau être prélevé, sans qu'il soit nécessaire d'enlever à nouveau la marque d'aile (11).

2. Dispositif selon la revendication 1, caractérisé en ce que le logement de transpondeur (22) est formé en poche sur l'une des branches (12') et, face à une entrée frontale, il présente une ouverture (24) pour l'engagement à peu pris coaxial d'une broche d'éjection du transpondeur (21).

3. Dispositif selon la revendication 1, caractérisé en ce que le transpondeur (21) est fixé dans un logement (22) en forme de bac, qui est formé longitudinalement dans une branche (12') et qui peut être fermé par une couverture (23).

4. Dispositif selon la revendication 3, caractérisé en ce que la couverture (23) est formée en languette ou en clapet sur la branche (12') du transpondeur.

5. Dispositif selon la revendication 3 ou 4, caractérisé en ce que dans le cas d'une marque d'aile (11) au moins à trois branches, une branche de couverture (12'') s'articule sur la branche (12') du transpondeur en tant que couverture (23) de son logement (22) et en ce que ces deux branches (12', 12'') peuvent s'accrocher entre elles de manière réversible.

6. Dispositif selon la revendication 5, caractérisé en ce que l'une des branches (12'') est entourée, à une extrémité frontale, par un collet (29) en arc, qui se termine dans des griffes d'encliquetage (27), auxquelles sont associés des enfoncements (28) devant l'extrémité frontale (15') de la branche (12') voisine dans la direction longitudinale.

7. Dispositif selon l'une des revendications 3 à 6, caractérisé en ce qu'il est prévu une marque d'aile en Z ou en W en matériau électriquement non conducteur, dont les branches (12) se succédant dans la direction longitudinale sont reliées entre elles par des zones (14) flexibles et, face à un encliquetage (collet 29) par paire, peuvent être reliées entre elles par une goupille barbelée (17).

8. Dispositif selon la revendication 7, caractérisé en ce qu'une pointe barbelée (18) est formée sur la goupille (17), qui traverse la plaque (16) perforée, à partir d'une extrémité de branche (15) libre, dans la zone d'assemblage (14) avec une branche (12' ou 12'') voisine.

9. Dispositif selon l'une des revendications précédentes, caractérisé en ce qu'une goupille de verrouillage (17) avec sa pointe barbelée (18) traverse une plaque (16) perforée en fente et s'engage dans un creux (31), qui est évidé dans la branche de transpondeur (12') devant une extrémité frontale du logement de transpondeur (22) en forme de bac.

10. Dispositif selon l'une des revendications 7 à 9, caractérisé en ce qu'il est prévu un collet (29) en forme de fer à cheval entre deux griffes (27), le long de l'extrémité frontale voisine d'une branche de couverture (12''), dans lequel l'extrémité frontale de branche (15') libre s'ajuste par concordance de forme, lorsque deux branches (12'-12'') successives sont repliées, pour être soutenues, par concordance de forme, face à la zone de charnière (14) dans la direction longitudinale et la direction transversale.
